# EUROPEAN PATENT APPLICATION

(11) **EP 3 226 603 A1**
(43) Date of publication of application: **04.10.2017**
(21) Application number: 17163289.6
(22) Date of filing: 28.03.2017
(51) Int. Cl.: H04W 24/02, H04W 84/12

(54) **METHOD AND APPARATUS FOR DIRECTED ADAPTIVE CONTROL OF ACCESS POINT-TO-CLIENT INTERACTION IN WIRELESS NETWORKS**

(30) Priority: 28.03.2016 US 201662314047 P; 02.08.2016 US 201615225966; 08.09.2016 US 201615259386
(71) Applicant: Network Performance Research Group LLC, San Jose, CA 95110 (US)
(72) Inventor: Ngo, Terry F. K., Bellevue WA 98008 (US)
(74) Representative: Grünecker Patent- und Rechtsanwälte PartG mbB

(57) **Abstract**

The present invention relates to wireless networks and more specifically to systems and methods for selecting and implementing communication parameters used in a wireless network to optimize communication between access points and client devices. In one embodiment, the present invention includes a Wi-Fi coordinator device that receives client device information from client devices connected to an access point in a network. The Wi-Fi coordinator sends the client device information to a cloud intelligence engine which then combines the client device information with other client device information to identify the client devices in the network and their Wi-Fi capabilities and limitations. Using this information, the cloud intelligence devices determines the access point settings that would optimize the operation of the network.

## Description

### CROSS REFERENCE TO RELATED APPLICATIONS

This application claims priority to U.S. Provisional Patent Application No. 62/314,047 titled METHOD AND APPARATUS FOR DIRECTED ADAPTIVE CONTROL OF ACCESS POINT-TO-CLIENT INTERACTION IN WIRELESS NETWORKS and filed on March 28, 2016, the disclosure of which is hereby incorporated herein by reference in its entirety. This application is a continuation-in-part of, and claims priority to, U.S. Patent Application No. 15/225,966 titled "METHOD AND APPARATUS FOR DIRECTED ADAPTIVE CONTROL OF DYNAMIC CHANNEL SELECTION IN WIRELESS NETWORKS" and filed on August 2, 2016, which is a continuation of U.S. Patent Application No. 15/085,573 titled "METHOD AND APPARATUS FOR DIRECTED ADAPTIVE CONTROL OF DYNAMIC CHANNEL SELECTION IN WIRELESS NETWORKS" and filed on March 30, 2016, which claims priority to U.S. Provisional Patent Application No. 62/203,383 titled "METHOD AND APPARATUS FOR DIRECTED ADAPTIVE CONTROL OF DYNAMIC CHANNEL SELECTION IN WIRELESS NETWORKS" and filed on August 10, 2015. The entireties of the foregoing applications listed herein are hereby incorporated by reference.

### BACKGROUND

The present invention relates to wireless networks and more specifically to systems and methods for selecting and implementing communication parameters in an access point to optimize the interaction between the access point and client devices.

Wi-Fi networks are crucial to today's portable modem life. Wi-Fi is the preferred network in the growing Internet-of Things (IoT). But, the technology behind current Wi-Fi has changed little in the last ten years. For example, the Wi-Fi network and the associated unlicensed spectrum are currently managed in inefficient ways. Such networks generally employ primitive control algorithms that assume the network consists of "self-managed islands," a concept originally intended for low density and low traffic environments. Further, there is little or no coordination between individual networks and equipment from different manufacturers or the client devices attached to the networks. Because of this, networks often do not operate at their peak capacity. For example, access point settings may be set to lowered performance levels to maximize interoperability. Indeed, to ensure interoperability with all possible client devices, access point settings are often tuned to settings below the capability of the access point to accommodate legacy devices.

A common instance of this occurs with the access point DTIM ("Delivery Traffic Indication Message") interval. Access points typically transmit at 100 millisecond intervals, 10 beacons per second. A DTIM is a specially marked beacon to cause clients to wake up. The DTIM interval indicates which of those 10 beacon slots will have buffered broadcast traffic delivered, i.e., a buffered group (broadcast or multicast) frame after the beacon is sent. Access points send these regular messages to wake up and synchronize attached client devices to maintain the client devices' connection to the network. Sleeping clients need to wake up in time to receive the broadcast group frames. A client typically sleeps between DTIMs in order to maximize power savings and wake up in time for incoming frames (discovery packets, ARP frames etc.). For historic reasons (and legacy) most access points set a DTIM of 100 milliseconds (I beacon) which means the sleep duration in which the access point will buffer multicast traffic for potentially sleeping stations is 100 milliseconds. Hence battery powered devices may only sleep for shorter intervals otherwise they risk losing these frames. The lower the DTIM interval value, the smaller the time between beacons. The higher the DTIM interval value, the larger the time between beacons. A higher DTIM interval may be beneficial because it improves the battery life of connected client devices: the wireless adapter in client devices is able to sleep in between the beacons, and the devices thereby save energy with longer DTIM intervals which results in longer battery life between charges. Most new client devices can maintain a network connection with a DTIM interval of less than or equal to 300 milliseconds. But legacy client devices often require a DTIM interval of 100 milliseconds or less. To maximize interoperability, the DTIM interval in most access points is set to 100 milliseconds, thereby accommodating both newer deices and legacy devices that may be on the network. But the DTIM interval remains fixed at 100 milliseconds regardless of whether a legacy device is connected to the network or not. This leads to an inefficient situation when an access point with only newer client devices could operate at a higher beacon interval but does not. Additionally, some vendors may not implement device specifications properly, and to allow interoperability, access points must use legacy standards that can used by all devices on the network. And in other cases, when device vendors do not implement device specifications properly, access points may be unable to detect and/or adapt to the device's non-standard operation and network performance suffers.

These situations are often worse in home networks than in enterprise networks since home networks are generally assembled in completely chaotic ad hoc ways. With more and more connected devices becoming commonplace, the net result is growing congestion and slowed networks with unreliable connections. Similarly, LTE-U networks operating in the same or similar unlicensed bands as 802.11 ac/n Wi-Fi suffer similar congestion and unreliable connection issues and will often create congestion and performance problems for existing Wi-Fi networks sharing the same channels.

One way to ameliorate Wi-Fi and LTE-U device congestion has been to open up part certain parts of the 5 GHz U-NII-2 band, known as the DFS band, to Wi-Fi use. Devices operating in the DFS band require active radar detection. This function is assigned to a device capable of detecting radar known as a DFS master, which is typically an access point or router. The DFS master actively scans the DFS channels and performs a channel availability check (CAC) and periodic in-service monitoring (ISM) after the channel availability check. The channel availability check lasts 60 seconds as required by the FCC Part 15 Subpart E and ETSI 301 893 standards. The DFS master signals to the other devices in the network (typically client devices) by transmitting a DFS beacon indicating that the channel is clear of radar. Although the access point can detect radar, wireless clients typically cannot. Because of this, wireless clients must first passively scan DFS channels to detect whether a beacon is present on that particular channel. During a passive scan, the client device switches through channels and listens for a beacon transmitted at regular intervals by the access point on an available channel.

Once a beacon is detected, the client is allowed to actively transmit on that channel. If the DFS master detects radar in that channel, the DFS master no longer transmits the beacon, and all client devices upon not sensing the beacon within a prescribed time must vacate the channel immediately and remain off that channel for 30 minutes. For clients associated with the DFS master network, additional information in the beacons (i.e. the channel switch announcement) can trigger a rapid and controlled evacuation of the channel. Normally, a DFS master device is an access point with only one radio and is able to provide DFS master services for just a single channel.

Prior systems and methods have significant down time when providing DFS master services. Further, they do not address network inefficiencies resulting from the lack of coordination and optimization between network access points and client devices. This disclosure recognizes and addresses, in at least certain embodiments, these problems.

### SUMMARY

The present invention relates to wireless networks and more specifically to systems and methods for selecting and implementing communication parameters used in a wireless network to optimize the interaction between access points and client devices. The present invention employs a wireless agility agent that includes a Wi-Fi coordinator (or LTE-U coordinator) to allow for selecting and implementing communication parameters in access points to optimize network operation. The coordinator collects information on behalf of the cloud intelligence engine and then coordinates the delivery and enforcement of operating parameters to access points. The agility agent may also contain a DFS master that provides access to additional bandwidth for wireless networks, such as IEEE 802.11ac/n networks. The additional bandwidth is derived from channels that require avoidance of channels with occupying signals. For example, additional bandwidth is derived from special compliance channels that require radar detection, such as the DFS channels of the U-NII-2 bands, by employing multi-channel radar detection and in-service monitoring, and active channel selection controls.

In one embodiment, the present invention utilizes an agility agent that includes a Wi-Fi coordinator device. The Wi-Fi coordinator device in the agility agent receives client device information from the client devices in a network. The client devices are associated, or connected, to an access point, which is also in communication with the Wi-Fi coordinator device. The Wi-Fi coordinator sends the client device information to a cloud intelligence engine. The cloud intelligence engine then combines the client device information with additional stored client device information - which the cloud intelligence engine has stored or retrieves from other sources - to identify the client devices in the network and their Wi-Fi capabilities and limitations. Using this information, the cloud intelligence devices determines the access point settings that would optimize the operation of the network.

Other embodiments and various examples, scenarios and implementations are described in more detail below. The following description and the drawings set forth certain illustrative embodiments of the specification. These embodiments are indicative, however, of but a few of the various ways in which the principles of the specification may be employed. Other advantages and novel features of the embodiments described will become apparent from the following detailed description of the specification when considered in conjunction with the drawings.

### BRIEF DESCRIPTION OF THE DRAWINGS

The aforementioned objects and advantages of the present invention, as well as additional objects and advantages thereof, will be more fully understood herein after as a result of a detailed description of a preferred embodiment when taken in conjunction with the following drawings in which:
Figure 1 illustrates portions of the 5 GHz Wi-Fi spectrum including portions that require active monitoring for radar signals.
Figure 2 illustrates how such an exemplary agility agent may interface with a conventional host access point, a cloud-based intelligence engine, and client devices in accordance with the present invention.
Figure 3 illustrates an exemplary system in which an agility agent acts as a Wi-Fi coordinator device in accordance with the present invention.
Figure 4 illustrates an exemplary flow of information in a system of the present invention.
Figure 5 illustrates an exemplary flow of information in a system of the present invention.
Figure 6 illustrates an embodiment of the agility agent of the present invention relative to a network access point.
Figure 7 illustrates an embodiment of the agility agent of the present invention relative to a network access point.
Figure 8 illustrates an exemplary method according to the present invention for selecting and implementing communication parameters to optimize the interaction between access points and client devices.
Figure 9 illustrates an exemplary method according to the present invention for selecting and implementing communication parameters to optimize the interaction between access points and client devices.
Figure 10 illustrates an exemplary method according to the present invention for selecting and implementing communication parameters to optimize the interaction between access points and client devices.
Figure 11 illustrates an exemplary method according to the present invention for selecting and implementing communication parameters to optimize the interaction between access points and client devices.

### DETAILED DESCRIPTION

The present invention relates to wireless networks and more specifically to systems and methods for selecting and implementing communication parameters used in a wireless network to optimize the interaction between access points and client devices. The present invention employs a wireless agility agent that includes a Wi-Fi coordinator to allow for selecting and implementing communication parameters in access points to optimize network operation. The coordinator collects information on behalf of the cloud intelligence engine and then coordinates the delivery and enforcement of operating parameters to access points. The agility agent may also contain a DFS master that provides access to access additional bandwidth for wireless networks, such as IEEE 802.11ac/n networks. The additional bandwidth is derived from channels that require avoidance of channels with occupying signals. For example, additional bandwidth is derived from special compliance channels that require radar detection, such as the DFS channels of the U-NII-2 bands, by employing multi-channel radar detection and in-service monitoring, and active channel selection controls.

In accordance with an implementation of the present invention, a system includes an agility agent that includes a Wi-Fi coordinator device. The Wi-Fi coordinator device in the agility agent receives client device information from the client devices in a network. The client devices are associated, or connected, to an access point, which is also in communication with the Wi-Fi coordinator device. The Wi-Fi coordinator sends the client device information to a cloud intelligence engine. The cloud intelligence engine then combines the client device information with other client device information - which the cloud intelligence engine has stored or retrieves from other sources - to identify the client devices in the network and their Wi-Fi capabilities and limitations. Using this information, the cloud intelligence devices determines the access point settings that would optimize the operation of the network.

In accordance with another implementation of the present invention, a method includes using a Wi-Fi coordinator device to receive client device information from one or more client devices associated with an access point device in communication with the Wi-Fi coordinator device. The method further includes using a cloud intelligence engine to receive the client device information, integrate the client device information with other client device information to generate client device capability information, and determine one or more operational Wi-Fi settings for the access point device based at least on the client device capability information.

In accordance with yet another implementation of the present invention, a system includes an access point, one or more client devices associated with the access point, a Wi-Fi coordinator device, and a cloud intelligence engine. The Wi-Fi coordinator device is communicatively coupled to the access point and configured to receive client device information from the one or more client devices. The cloud intelligence engine is communicatively coupled to the Wi-Fi coordinator device and configured to receive the client device information, integrate the client device information with other client device information to generate client device capability information. The cloud intelligence engine is also configured to determine one or more operational Wi-Fi settings for the access point device based at least on the client device capability information.

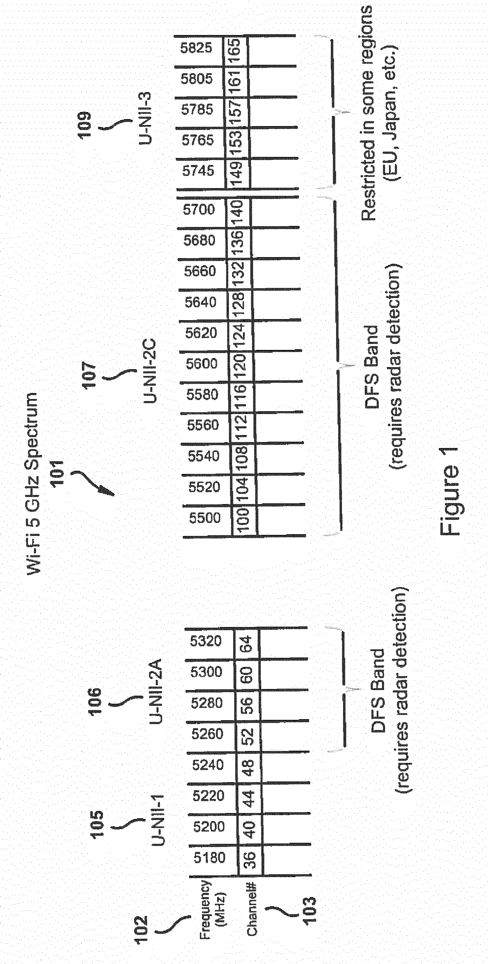

Wi-Fi channels available for network communication currently include portions of the 2.4 GHz Wi-Fi spectrum and the 5 GHz Wi-Fi spectrum. Figure 1 illustrates portions of the 5 GHz Wi-Fi spectrum 101. Figure 1 shows frequencies 102 and channels 103 that make up portions of the 5 GHz Wi-Fi spectrum 101. The channels 103 of the GHz Wi-Fi spectrum 101 may be a plurality of 5 GHz communication channels (e.g., a plurality of 5 GHz radio channels). A U-NII band is an FCC regulatory domain for 5-GHz wireless devices and is part of the radio frequency spectrum used by IEEE 802.11ac/n devices and by many wireless internet service providers. The U-NII band operates over four ranges. For example, a U-NII-1 band 105 covers the 5.15-5.25 GHz range of the 5 GHz Wi-Fi spectrum 101, a U-NII-2A band 106 covers the 5.25-5.35 GHz range of the 5 GHz Wi-Fi spectrum 101, a U-NII-2C band 107 covers the 5.47-5.725 GHz range of the 5 GHz Wi-Fi spectrum 101, and a U-NII-3 band 109 covers the 5.725-5.850 GHz range of the 5 GHz Wi-Fi spectrum 101. The U-NII-2A band 106 is subject to DFS radar detection and avoidance requirements. The U-NII-2C band 107 is also subject to DFS radar detection and avoidance requirements. Use of the U-NII-3 band 109 is restricted in some jurisdictions like the European Union and Japan.

When used in an 802.11ac/n or LTE-U wireless network, an agility agent of the present invention functions as an autonomous DFS master device. In contrast to conventional DFS master devices, the agility agent is not an access point or router, but rather the agility agent is a standalone wireless device employing inventive scanning techniques described herein that provide DFS scan capabilities across multiple channels, enabling one or more access point devices and peer-to-peer client devices to exploit simultaneous multiple DFS channels. The agility agent of the present invention may be incorporated into another device such as an access point, LTE-U host, base station, cell, or small cell, media or content streamer, speaker, television, mobile phone, mobile router, software access point device, or peer to peer device but does not itself provide network access to client devices. In particular, in the event of a radar event or a false-detect, the enabled access point and clients or wireless device are able to move automatically, predictively and very quickly to another DFS channel.

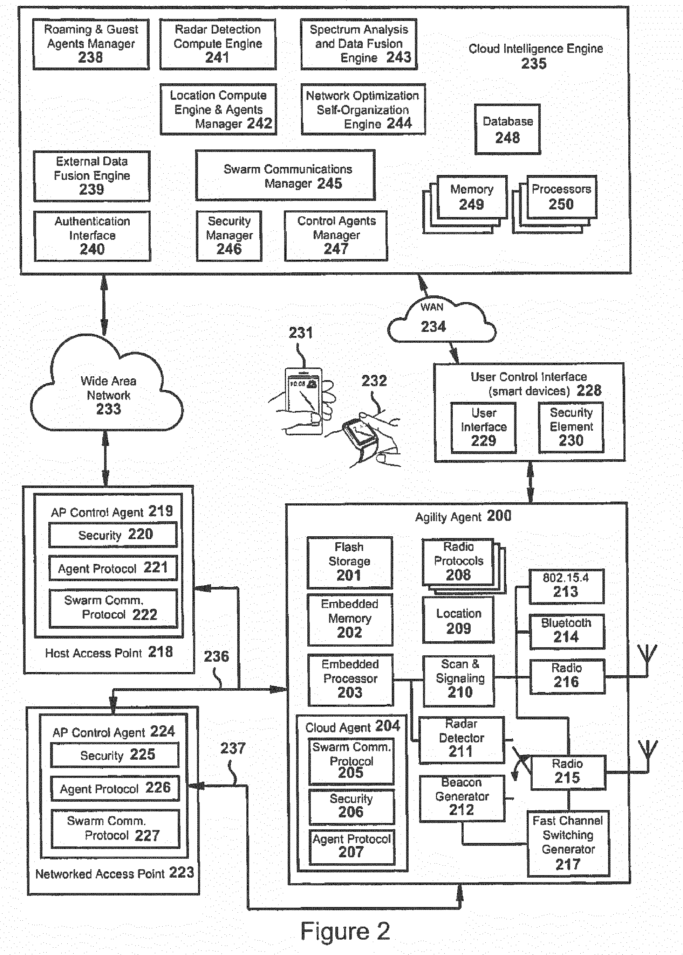

Figure 2 provides a detailed illustration of an exemplary system of the present invention. As illustrated in Figure 2, an agility agent 200, in the role of an autonomous DFS master device, may control at least one access point (e.g., a host access point 218) to dictate selection of a channel (e.g., a communication channel associated with the 5 GHz Wi-Fi spectrum 101) for the at least one access point. In one example, the agility agent 200 may be an agility agent device. In another example, the agility agent 200 may be a DFS device (e.g., an autonomous DFS master device, a standalone multi-channel DFS master, etc.). The agility agent 200 may dictate selection of a channel for the at least one access point (e.g., the host access point 218) based on information provided to and/or received from a cloud intelligence engine 235. For example, the agility agent 200 may be an agility agent device in communication with the host access point device 218. Furthermore, the agility agent 200 may generate spectral information associated with a plurality of 5 GHz communication channels (e.g., a plurality of 5 GHz communication channels associated with the 5 GHz Wi-Fi spectrum 101) for the host access point device 218. The cloud intelligence engine 235 may be a device (e.g. a cloud intelligence engine) that receives the spectral information via a wide area network 233 (e.g. via a network device associated with the wide area network 233). Furthermore, the cloud intelligence engine 235 may integrate the spectral information with other spectral information associated with other host access point devices (e.g., other access point devices 223) to generate integrated spectral information. Then, the cloud intelligence engine 235 may determine a communication channel (e.g., a communication channel from the plurality of 5 GHz communication channels associated with the 5 GHz Wi-Fi spectrum 101) for the host access point device 218 and based at least on the integrated spectral information.

In an aspect, the agility agent 200 may dictate channel selection by (a) signaling availability of one or more DFS channels by simultaneous transmission of one or more beacon signals; (b) transmitting a listing of both the authorized available DFS channels, herein referred to as a whitelist, and the prohibited DFS channels in which a potential radar signal has been detected, herein referred to as a blacklist, along with control signals and a time-stamp signal, herein referred to as a dead-man switch timer via an associated non-DFS channel; (c) transmitting the same signals as (b) over a wired medium such as Ethernet or serial cable; and (d) receiving control, coordination and authorized and preferred channel selection guidance information from the cloud intelligence engine 235. The agility agent 200 sends the time-stamp signal, or dead-man switch timer, with communications to ensure that the access points 218, 223 do not use the information, including the whitelist, beyond the useful lifetime of the information. For example, a whitelist will only be valid for certain period of time. The time-stamp signal avoids using noncompliant DFS channels by ensuring that an access point will not use the whitelist beyond its useful lifetime. The present invention allows currently available 5 GHz access points without radar detection - which cannot operate in the DFS channels - to operate in the DFS channels by providing the radar detection required by the FCC or other regulatory agencies.

The host access point 218 and any other access point devices 223 under control of the agility agent 200 typically have an access point control agent portion 219, 224 installed within respective communication stacks. The access point control agent 219, 224 is an agent that acts under the direction of the agility agent 200 to receive information and commands from the agility agent 200. The access point control agent 219, 224 acts on information from the agility agent 200. For example, the access point control agent 219,224 listens for information like a whitelist or blacklist from the agility agent. If a radar signal is detected by the agility agent 200, the agility agent 200 communicates that to the access point control agent 219, 224, and the access point control agent 219, 224 acts to evacuate the channel within a certain time interval (e.g., immediately). The control agent can also take commands from the agility agent 200. For example, the host access point 218 and network access point 223 can offload DFS monitoring to the agility agent 200 as long as they can listen to the agility agent 200 and take commands from the agility agent regarding available DFS channels.

The host access point 218 is connected to the wide area network 233 and includes the access point control agent 219 to facilitate communications with the agility agent 200. The access point control agent 219 includes a security module 220 and agent protocols 221 to facilitate communication with the agility agent 200, and swarm communication protocols 222 to facilitate communications between agility agents, access points, client devices and/or other devices in the network. The agility agent 200 connects to the cloud intelligence engine 235 via the host access point 218 and the wide area network 233. The host access point 218 may set up a secure communications tunnel to communicate with the cloud intelligence engine 235 through, for example, an encrypted control API in the host access point 218. The agility agent 200 may transmit (e.g., though the secure communications tunnel) the spectral information to the cloud intelligence engine 235. The spectral information may include information such as, for example, a whitelist (e.g., a whitelist of each of the plurality of 5 GHz communication channels associated with the 5 GHz Wi-Fi spectrum 101 that does not contain a radar signal), a blacklist (e.g., a blacklist of each of the plurality of 5 GHz communication channels associated with the 5 GHz Wi-Fi spectrum 101 that contains a radar signal), scan information associated with a scan for a radar signal in the plurality of 5 GHz communication channels associated with the 5 GHz Wi-Fi spectrum 101, state information, location information associated with the agility agent device and/or the access point device, time signals, scan lists (e.g., scan lists showing neighboring access points, etc.), congestion information (e.g., number of re-try packets, type of re-try packets, etc.), traffic information, other channel condition information, and/or other spectral information. The cloud intelligence engine 235 may combine the spectral information with other spectral information (e.g., other spectral information associated with agility agent(s) 251) to generate combined spectral information. Then, the cloud intelligence engine 235 may determine a particular communication channel (e.g., a particular communication channel associated with the 5 GHz Wi-Fi spectrum 101) and may communicate the particular communication channel to the agility agent 200 (e.g., via the secure communications tunnel). Additionally or alternatively, the cloud intelligence engine 235 may communicate other information to the agility agent 200 (e.g., via the secure communications tunnel) such as, for example, access point location (including neighboring access points), access point/cluster current state and history, statistics (including traffic, congestion, and throughput), whitelists, blacklists, authentication information, associated client information, regional information, regulatory information and/or other information. The agility agent 200 uses the information from the cloud intelligence engine 235 to control the host access point 218, other access points and/or other network devices.

The agility agent 200 may communicate via wired connections or wirelessly with the other network components. In the illustrated example, the agility agent 200 includes a primary radio 215 and a secondary radio 216. The primary radio 215 is for DFS and radar detection. The primary radio 215 is typically a 5 GHz radio. In one example, the primary radio 215 can be a 5 GHz transceiver. The agility agent 200 may receive radar signals, traffic information, and/or congestion information through the primary radio 215. And the agility agent 200 may transmit information, such as DFS beacons, via the primary radio 215. The secondary radio 216 is a secondary radio for sending control signals to other devices in the network. The secondary radio 216 is typically a 2.4 GHz radio. The agility agent 200 may receive information such as network traffic, congestion, and/or control signals with the secondary radio 216. And the agility agent 200 may transmit information, such as control signals, with the secondary radio 216. The primary radio 215 is connected to a fast channel switching generator 217 that includes a switch and allows the primary radio 215 to switch rapidly between a radar detector 211 and beacon generator 212. The fast channel switching generator 217 allows the radar detector 211 to switch sufficiently fast to appear to be on multiple channels at a time.

In one embodiment, a standalone multi-channel DFS master (e.g., the agility agent 200) includes a beacon generator 212 to generate a beacon in each of a plurality of 5 GHz radio channels (e.g., a plurality of 5 GHz radio channels associated with the 5 GHz Wi-Fi spectrum 101), a radar detector 211 to scan for a radar signal in each of the plurality of 5 GHz radio channels, a 5 GHz radio transceiver (e.g., the primary radio 215) to transmit the beacon in each of the plurality of 5 GHz radio channels and to receive the radar signal in each of the plurality of 5 GHz radio channels, and a fast channel switching generator 217 coupled to the radar detector, the beacon generator, and the 5 GHz radio transceiver. The fast channel switching generator 217 switches the 5 GHz radio to a first channel of the plurality of 5 GHz radio channels and then causes the beacon generator 212 to generate the beacon in the first channel of the plurality of 5 GHz radio channels. Then, the fast channel switching generator 217 causes the radar detector 211 to scan for the radar signal in the first channel of the plurality of 5 GHz radio channels. The fast channel switching generator 217 then repeats these steps for each other channel of the plurality of 5 GHz radio channels during a beacon transmission duty cycle and, in some examples, during a radar detection duty cycle. The beacon transmission duty cycle is the time between successive beacon transmissions on a given channel and the radar detection duty cycle which is the time between successive scans on a given channel. Because the agility agent 200 cycles between beaconing and scanning in each of the plurality of 5 GHz radio channels in the time window between a first beaconing and scanning in a given channel and a subsequent beaconing and scanning the same channel, it can provide effectively simultaneous beaconing and scanning for multiple channels.

The agility agent 200 also may contain a Bluetooth radio 214 and/or an 802.15.4 radio 213 for communicating with other devices in the network. The agility agent 200 may include various radio protocols 208 to facilitate communication via the included radio devices.

The agility agent 200 may also include a location module 209 to geolocate or otherwise determine the location of the agility agent 200. As shown in Figure 2, the agility agent 200 may include a scan and signaling module 210. The agility agent 200 includes embedded memory 202, including for example flash storage 201, and an embedded processor 203. The cloud agent 204 in the agility agent 200 facilitates aggregation of information from the cloud agent 204 through the cloud and includes swarm communication protocols 205 to facilitate communications between agility agents, access points, client devices, and other devices in the network. The cloud agent 204 also includes a security module 206 to protect and secure the cloud communications of the agility agent 200, as well as agent protocols 207 to facilitate communication with the access point control agents 219, 224.

As shown in Figure 2, the agility agent 200 may control other access points, for example networked access point 223, in addition to the host access point 218. The agility agent 200 may communicate with the other access points 223 via a wired or wireless connection 236, 237. The other access points 223 include an access point control agent 224 to facilitate communication with the agility agent 200 and other access points. The access point control agent 224 includes a security module 225, agent protocols 226 and swarm communication protocols 227 to facilitate communications with other agents (including other access points and client devices) on the network.

The cloud intelligence engine 235 includes a database 248 and memory 249 for storing information from the agility agent 200, one or more other agility agents (e.g., the agility agent(s) 251) connected to the cloud intelligence engine 235 and/or one or more external data source (e.g., data source(s) 252). The database 248 and memory 249 allow the cloud intelligence engine 235 to store information associated with the agility agent 200, the agility agent(s) 251 and/or the data source(s) 252 over a certain period of time (e.g., days, weeks, months, years, etc.). The data source(s) 252 may be associated with a set of databases. Furthermore, the data source(s) 252 may include regulation information such as, but not limited to, GIS information, other geographical information, FCC information regarding the location of radar transmitters, FCC blacklist information, NOAA databases, DOD information regarding radar transmitters, DOD requests to avoid transmission in DFS channels for a given location, and/or other regulatory information.

The cloud intelligence engine 235 also includes processors 250 to perform the cloud intelligence operations described herein. In an aspect, the processors 250 may be communicatively coupled to the memory 249. Coupling can include various communications including, but not limited to, direct communications, indirect communications, wired communications, and/or wireless communications. In certain implementations, the processors 250 may be operable to execute or facilitate execution of one or more of computer-executable components stored in the memory 249. For example, the processors 250 may be directly involved in the execution of the computer-executable component(s), according to an aspect. Additionally or alternatively, the processors 250 may be indirectly involved in the execution of the computer executable component(s). For example, the processors 250 may direct one or more components to perform the operations.

The roaming and guest agents manager 238 in the cloud intelligence engine 235 provides optimized connection information for devices connected to agility agents that are roaming from one access point to another access point (or from one access point to another network). The roaming and guest agents manager 238 also manages guest connections to networks for agility agents connected to the cloud intelligence engine 235. The external data fusion engine 239 provides for integration and fusion of information from agility agents with information from the data source(s) 252. For example, the external data fusion engine 239 may integrate and/or fuse information such as, but not limited to, GIS information, other geographical information, FCC information regarding the location of radar transmitters, FCC blacklist information, NOAA databases, DOD information regarding radar transmitters, DOD requests to avoid transmission in DFS channels for a given location, and/or other information. The cloud intelligence engine 235 further includes an authentication interface 240 for authentication of received communications and for authenticating devices and users. The radar detection compute engine 241 aggregates radar information from the agility agent 200, the agility agent(s) 251 and/or the data source(s) 252. The radar detection compute engine 241 also computes the location of radar transmitters from those data to, among other things, facilitate identification of false positive radar detections or hidden nodes and hidden radar. The radar detection compute engine 241 may also guide or steer multiple agility agents to dynamically adapt detection parameters and/or methods to further improve detection sensitivity. The location compute and agents manager 242 determines the location of the agility agent 200 and other connected devices (e.g., agility agent(s) 251) through Wi-Fi lookup in a Wi-Fi location database, querying passing devices, scan lists from agility agents, or geometric inference.

The spectrum analysis and data fusion engine 243 and the network optimization self-organization engine 244 facilitate dynamic spectrum optimization with information from the agility agent 200, the agility agent(s) 251 and/or the data source(s) 252. Each of the agility agents (e.g., the agility agent 200 and/or the agility agent(s) 251) connected to the cloud intelligence engine 235 have scanned and analyzed the local spectrum and communicated that information to the cloud intelligence engine 235. The cloud intelligence engine 235 also knows the location of each agility agent (e.g., the agility agent 200 and/or the agility agent(s) 251) and the access points proximate to the agility agents that do not have a controlling agent as well as the channel on which each of those devices is operating. With this information, the spectrum analysis and data fusion engine 243 and the network optimization self-organization engine 244 can optimize the local spectrum by telling agility agents (e.g., the agility agent 200 and/or the agility agent(s) 251) to avoid channels subject to interference. The swarm communications manager 245 manages communications between agility agents, access points, client devices, and other devices in the network. The cloud intelligence engine includes a security manager 246. The control agents manager 247 manages all connected control agents.

Independent of a host access point 218, the agility agent 200, in the role of an autonomous DFS master device, may also provide the channel indication and channel selection control to one or more peer-to-peer client devices 231, 232 within the coverage area by (a) signaling availability of one or more DFS channels by simultaneous transmission of one or more beacon signals; (b) transmitting a listing of both the authorized available DFS channels, herein referred to as a whitelist and the prohibited DFS channels in which a potential radar signal has been detected, herein referred to as a blacklist along with control signals and a time-stamp signal, herein referred to as a dead-man switch timer via an associated non-DFS channel; and (c) receiving control, coordination and authorized and preferred channel selection guidance information from the cloud intelligence engine 235. The agility agent 200 sends the time-stamp signal, or dead-man switch timer, with communications to ensure that the devices do not use the information, including the whitelist, beyond the useful lifetime of the information. For example, a whitelist will only be valid for certain period of time. The time-stamp signal avoids using noncompliant DFS channels by ensuring that a device will not use the whitelist beyond its useful lifetime.

Such peer-to-peer devices may have a user control interface 228. The user control interface 228 includes a user interface 229 to allow the client devices 231, 232 to interact with the agility agent 200 via the cloud intelligence engine 235. For example, the user interface 229 allows the user to modify network settings via the agility agent 200 including granting and revoking network access. The user control interface 228 also includes a security element 230 to ensure that communications between the client devices 231, 232 and the agility agent 200 are secure. The client devices 231, 232 are connected to a wide area network 234 via a cellular network for example. Peer-to-peer wireless networks are used for direct communication between devices without an access point. For example, video cameras may connect directly to a computer to download video or images files using a peer-to-peer network. Also, device connections to external monitors and device connections to drones currently use peer-to-peer networks. Because there is no access point in a peer-to-peer network, traditional peer-to-peer networks cannot use the DFS channels because there is no access point to control the DFS channel selection and tell the devices what DFS channels to use. The present invention overcomes this limitation.

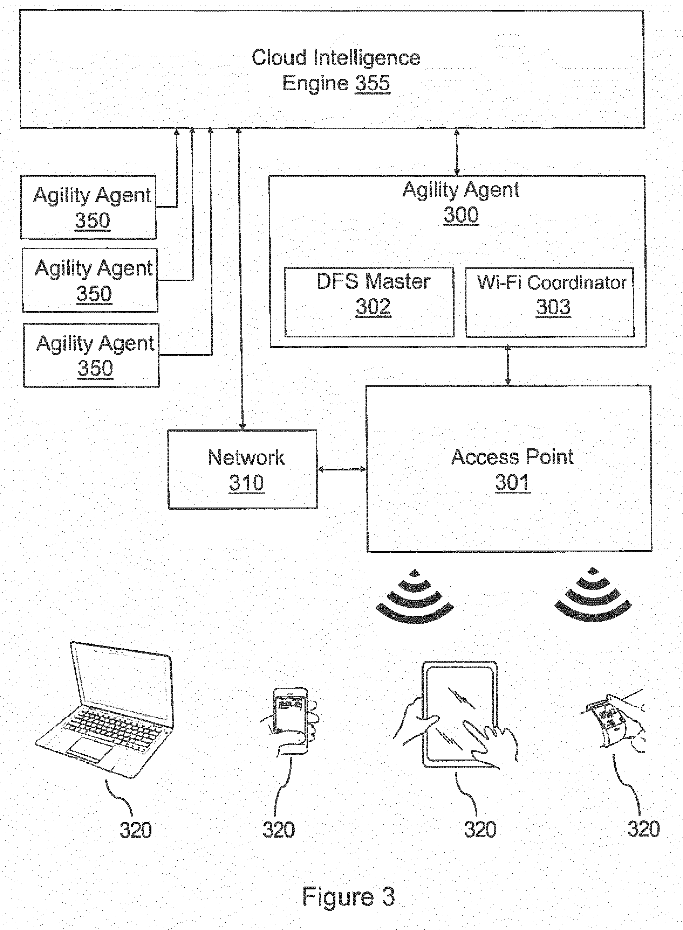

In addition to the aspects described above in connection with Figure 2, the agility agent may operate as a Wi-Fi coordinator device for a network. In its capacity as a Wi-Fi coordinator device, the agility agent controls settings in an access point of a wireless network to optimize the communication between the access point and attached client devices. Figure 3 illustrates an exemplary system in which an agility agent 300 acts as a Wi-Fi coordinator device. As illustrated, the agility agent 300 includes both DFS master 302 and Wi-Fi coordinator 303 capability. The agility agent 300 is in communication with the access point 301. The Wi-Fi coordinator 303 in the agility agent 300 is configured to receive client device information from one or more client devices 320 associated with the access point 301. To maximize interoperability with client devices 320, the access point 301 settings are typically set to lowered performance levels to allow for interaction with legacy devices. If none of the client devices 320 actually require legacy device settings, then the access point 301 settings unnecessarily reduce the performance of the network. The architecture described above in connection with Figure 2 and illustrated in Figure 3 allows the agility agent 300, in concert with the cloud intelligence engine 355, to determine if any of the client devices 320 require legacy device settings and to adjust the access point 301 settings accordingly. Further, the Wi-Fi coordinator may also be configured to capture information from other networks. In this instance, the Wi-Fi coordinator not only receives client information from the access point 301, or attached clients themselves, but it can also detect client association in neighboring networks over the air passively. This is advantageous because, for example, neighboring networks on the same channel may be filled with legacy devices that require protection mechanisms, and being able to sense these legacy devices in the same channel can provide more information to the cloud intelligence engine.

As shown in Figure 3, the cloud intelligence engine 355 is communicatively coupled to the agility agent 300. The cloud intelligence engine 355 is configured to receive the client device information from the agility agent 300 and to integrate the client device information with other client device information. The client device information can include information such as a vendor specific identification, Media Access Control (MAC) address or information sent in probe requests or information sent in association requests for the client devices 320, or. The other client device information the cloud intelligence engine 355 uses is information that connects the client device information (e.g. the vendor specific identification or MAC address) to the Wi-Fi specifications for the device 320. This way, the cloud intelligence engine 355 determines the Wi-Fi capability information for each of the client devices 320 connected to the access point 301. After the cloud intelligence engine 355 generates the client device capability information, it determines one or more Wi-Fi setting for the access point 301 to use (operational Wi-Fi settings) based (at least in part) on the client device capability information.

The cloud intelligence engine 355 may transmit the operational Wi-Fi settings to the agility agent 300, and the Wi-Fi coordinator 303 in the agility agent 300 causes the access point 301 to implement the one or more operational Wi-Fi settings. The agility agent 300 may use the access point control agent 219, 224 shown in Figure 2 to cause the access point 301 to implement the operational Wi-Fi settings.

As previously described, the cloud intelligence engine 355 contains databases and may obtain data from external sources. In one embodiment, the cloud intelligence engine 355 determines the operational Wi-Fi settings based on Wi-Fi standards information stored in one or more databases. Further, the cloud intelligence engine 355 may determine the operational Wi-Fi settings based on regulatory information associated with the client devices 320.

In addition to retrieving information about the client devices 320 from internal and external databases, the cloud intelligence engine 355 may compile empirical information about the client devices 320 through observation and experimentation. As shown in Figure 3, the cloud intelligence engine 355 is connected to multiple agility agents 300, 350. These agility agents 300, 350 may be dispersed throughout the world and may gather information about the client devices connected to the access points connected the respective agility agents 300, 350. In one embodiment, the cloud intelligence engine 355 and the Wi-Fi coordinator 303 in the agility agent 300 are configured to cause the access point 301 to adjust one or more temporary Wi-Fi settings. The settings are temporary, because the cloud intelligence engine 355 has not yet determined the optimized operational settings at which to optimize the access point 301 communication with the client devices 320. As it varies the temporary Wi-Fi settings in the access point 301, the cloud intelligence engine 355 and the Wi-Fi coordinator 303 in the agility agent 300 receive Wi-Fi performance parameters and determine how the Wi-Fi performance parameters change as a function of the variations in the temporary Wi-Fi settings. Based on the variation in the Wi-Fi performance parameters, the cloud intelligence engine 355 determines the operational Wi-Fi settings for the access point 301. Additionally, the cloud intelligence engine 355 may isolate one of the client devices 320 and vary the temporary Wi-Fi settings and monitor the performance parameters for the one client device 320. This way, the cloud intelligence engine 355 can build and update a database of client device capabilities and optimal settings.

The cloud intelligence engine 355 includes a database for storing the variation in the Wi-Fi performance parameters relative to the adjustment in the temporary Wi-Fi settings. And the cloud intelligence engine 355 may use the stored information to determine optimized operational Wi-Fi settings for a second access point (e.g., another access point connected to the agility agent 300 or to one of the other agility agents 350) based on the variation in the one or more Wi-Fi performance parameters.

The Wi-Fi performance parameters include information such as Wi-Fi throughput, range, signal strength, error rate, collision rate, and output power. The operational Wi-Fi settings include beacon interval, beamforming settings, Wi-Fi multimedia power save (WMMPS) compatibility, frame burst, delivery traffic indication message (DTIM) interval, fragmentation threshold, request to send (RTS) threshold, transmit (TX) antenna, receive (RX) antenna, preamble length, transmit (TX) power, Afterburner/Super G/Speedbooster, Bluetooth coexistence mode, wireless network mode, and sensitivity range (acknowledge (ACK) timing). The above lists are only examples of the access point parameters that may be optimized with the present invention. For example, access point parameters that can be optimized with the present invention may include chipset-specific parameters.

In addition to the performance and operational parameters discussed above, the cloud intelligence engine 355 of the present invention may optimize security settings in an access point based on who is on the network or what devices are connected to the network in order to improve safety and/or reliability of the network. For example, the cloud intelligence engine 355 may configure access point isolation, firewall settings for guest network access to insure network isolation, and/or wireless GUI access (access to the wireless graphical user interface of the access point using a client device. The cloud intelligence engine 355 may also perform security configuration and periodic auditing of the access point.

Further the cloud intelligence engine 355 of the present invention may modify parameters in client devices to optimize network performance. Indeed, the cloud intelligence engine 355 could query the device regarding certain bugs or incompatibilities that would require setting changes and the cloud intelligence engine 355 could use the client device information it obtains to look up bugs or incompatibilities. For example, if one attached client device is known to cause problems with a feature that would cause problems in the network, the cloud intelligence engine 355 could instruct the client device to disable that feature to allow other devices on the network to continue using the feature without disruption. Also, the client device could query the cloud intelligence engine 355 to know if the model of access point used had a bug fix available to allow certain features. This could help a client device dynamically activate workarounds based on the peculiarities of the access point.

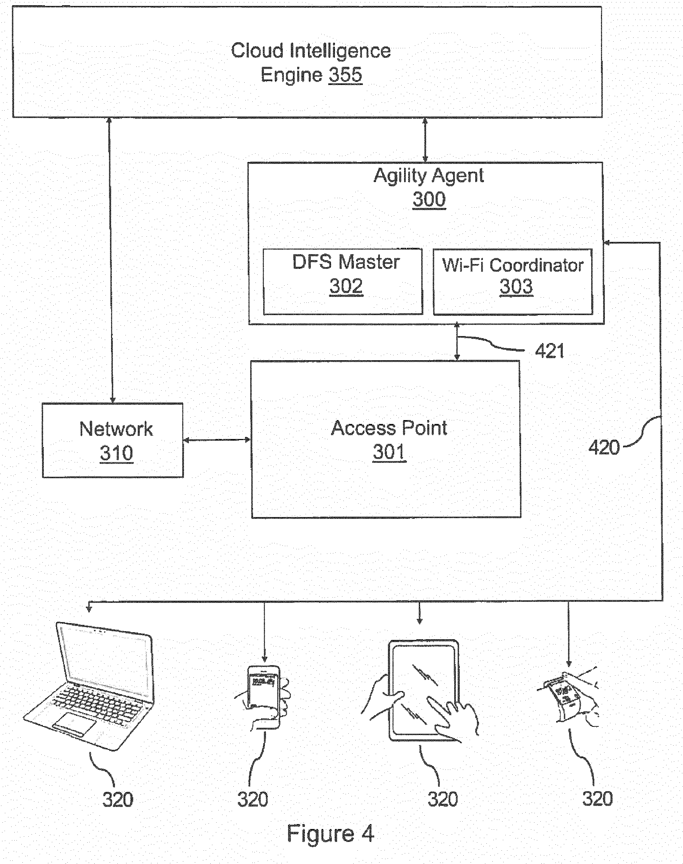

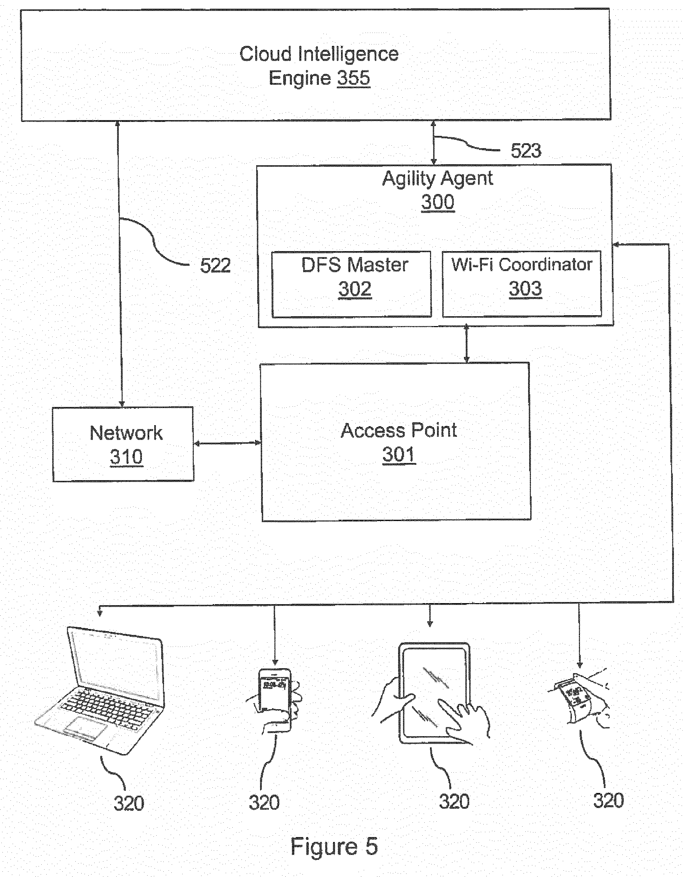

Figures 4 and 5 illustrate an exemplary flow of information in a system of the present invention. As shown in Figure 4, in one embodiment, the Wi-Fi coordinator 303 receives the client device information directly 420 from the client devices 320. The Wi-Fi coordinator 303 may receive the client device information directly 420 from the client devices 320 via a radio receiver in the agility agent 300 that scans for the client device information. Alternatively, Wi-Fi coordinator 303 may receive the client device information directly 420 from the client devices 320 via an application on the client devices 320. In another embodiment, the Wi-Fi coordinator 303 receives the client device information from the access point 301 via a communication path 421. Additionally, the Wi-Fi coordinator 303 may also capture information from other networks (not shown). The Wi-Fi coordinator 303 not only receives client information from the access point 301, or attached clients 320, but it can also detect client association in neighboring networks (not shown). This way, the Wi-Fi coordinator 303 can sense legacy devices in the same channel in neighboring networks and can provide more information to the cloud intelligence engine 355 regarding the legacy devices that require protection mechanisms.

Figure 5 illustrates the transmission of information from the Wi-Fi coordinator 303 to the cloud intelligence engine 355. As shown, the Wi-Fi coordinator 303 may transmit the client device information to the cloud intelligence engine 355 over a communication path 522 via a wide area network 310. Alternatively, the Wi-Fi coordinator 303 may transmit the client device information to the cloud intelligence engine 355 over a communication path 523 through a network connection of a client device 320 acting as a proxy. Additionally, the Wi-Fi coordinator 303 may send information about the access point 301 to the cloud intelligence engine 355. The cloud intelligence engine 355 may use this information to determine the optimized operational Wi-Fi settings for the access point 301.

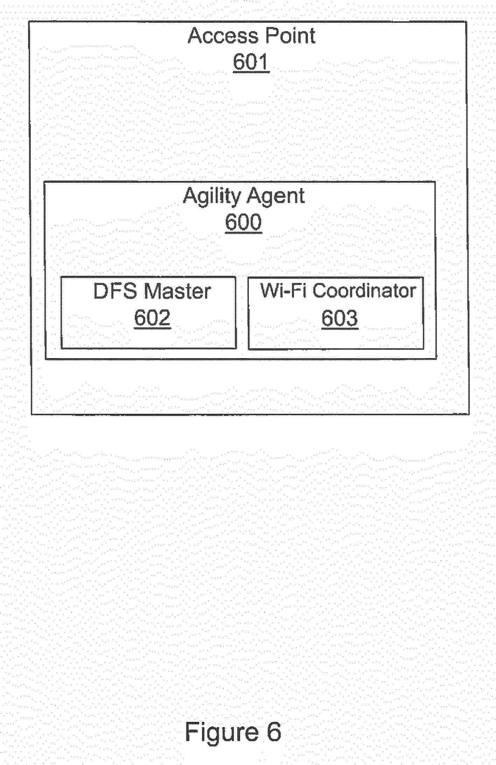

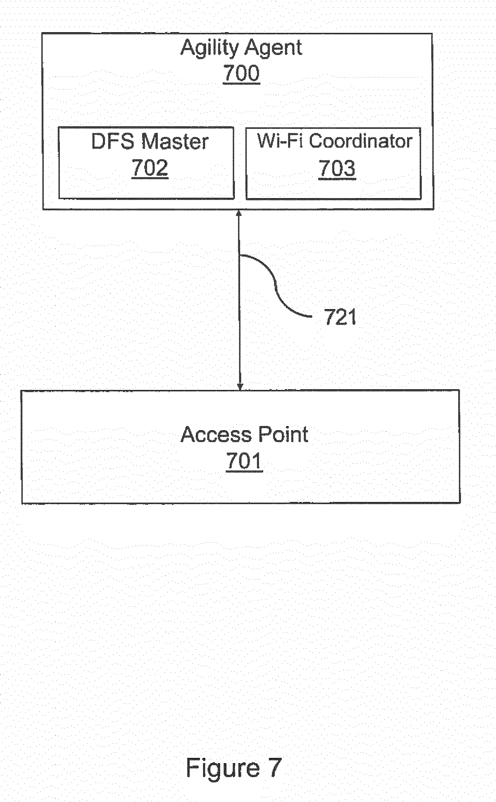

Figures 6 and 7 illustrate embodiments of the agility agent of the present invention relative to a network access point. As illustrated in Figure 6, the agility agent 600 (including the Wi-Fi coordinator 603 and the DFS master 602) may be physically or operationally integrated with the access point 601. In one example, the agility agent 600 and/or Wi-Fi coordinator 603 utilize processing resources in the access point 601. Alternatively, as shown in Figure 7, the agility agent 700 (including the Wi-Fi coordinator 703 and the DFS master 702) may be a standalone device separate from but communicatively coupled 721 to the access point 701. In the standalone example, the agility agent 700 and/or Wi-Fi coordinator 703 do not utilize processing resources in the access point 701.

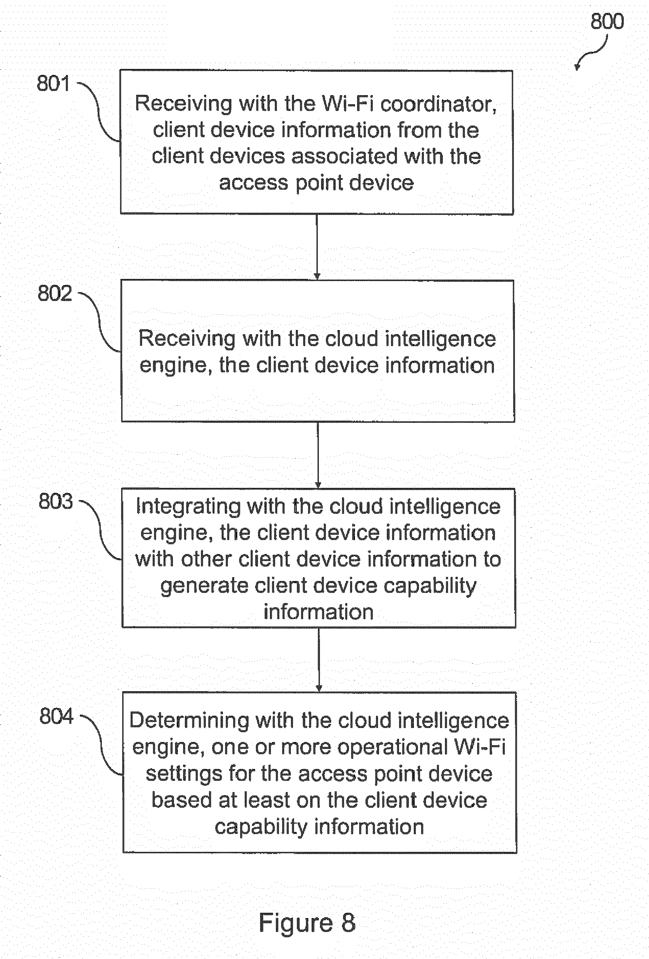

In view of the subject matter described supra, methods that can be implemented in accordance with the subject disclosure will be better appreciated with reference to the flowcharts of FIGS. 8-11. While for purposes of simplicity of explanation, the methods are shown and described as a series of blocks, it is to be understood and appreciated that such illustrations or corresponding descriptions are not limited by the order of the blocks, as some blocks may occur in different orders and/or concurrently with other blocks from what is depicted and described herein. Any non-sequential, or branched, flow illustrated via a flowchart should be understood to indicate that various other branches, flow paths, and orders of the blocks, can be implemented which achieve the same or a similar result. Moreover, not all illustrated blocks may be required to implement the methods described hereinafter.

Figure 8 illustrates an exemplary method 800 according to the present invention for selecting and implementing communication parameters to optimize the interaction between access points and client devices. Initially, at 801, a Wi-Fi coordinator receives client device information from one or more client devices associated with an access point device. The access point is in communication with the Wi-Fi coordinator. Next, at 802, the cloud intelligence engine receives the client device information from the Wi-Fi coordinator. At 803, the cloud intelligence engine then combines, or integrates, the client device information with other client device information - which the cloud intelligence engine has stored or retrieves from other sources - to identify the client devices in the network and their Wi-Fi capabilities and limitations. Next, at 804, using this information, the cloud intelligence device determines the access point settings that would optimize the operation of the network.

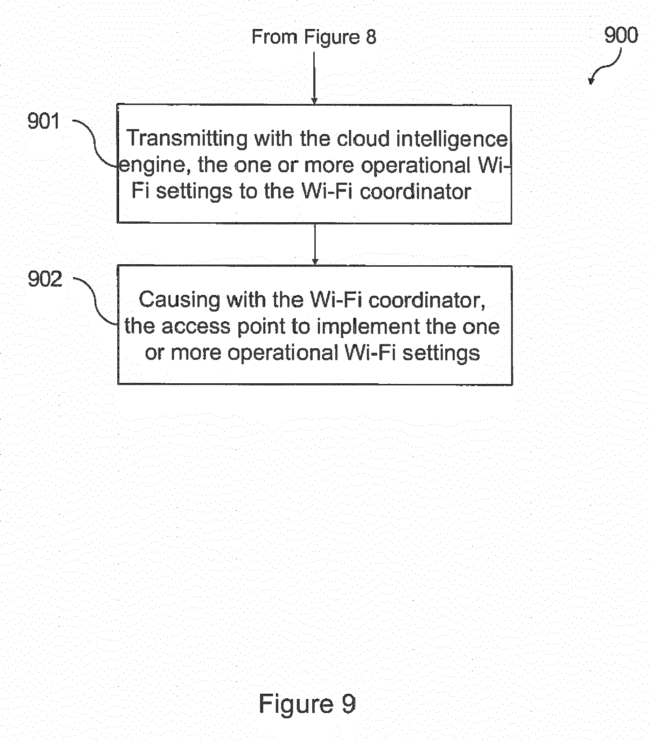

Figure 9 illustrates additional steps 900 in an exemplary method according to the present invention for selecting and implementing communication parameters to optimize the interaction between access points and client devices. After the steps illustrated in Figure 8, at 901 the cloud intelligence engine transmits the one or more operational Wi-Fi settings to the Wi-Fi coordinator device. And at 902 the Wi-Fi coordinator causes the access point to implement the one or more operational Wi-Fi settings.

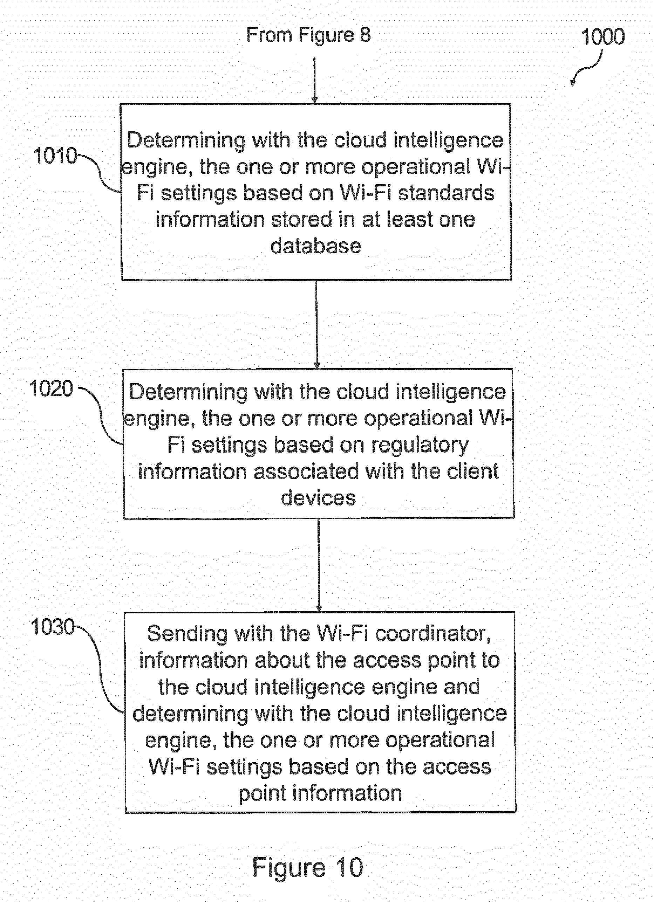

Figure 10 illustrates an exemplary method 1000 according to the present invention for determining an operating channel for an access point device via an agility agent device and a cloud intelligence engine device. The method illustrated in Figure 10 includes the steps described in relation to Figure 8 above but also includes the following optional additional steps. At 1010, the method includes using the cloud intelligence engine to determine the one or more operational Wi-Fi settings based on Wi-Fi standards information stored in at least one database. And at 1020, the method includes using the cloud intelligence engine to determine the one or more operational Wi-Fi settings based on regulatory information associated with the client devices. Further, as shown at 1030, the method may also include using the Wi-Fi coordinator device to send information about the access point to the cloud intelligence engine and using the cloud intelligence engine to determine the one or more operational Wi-Fi settings based on the access point information.

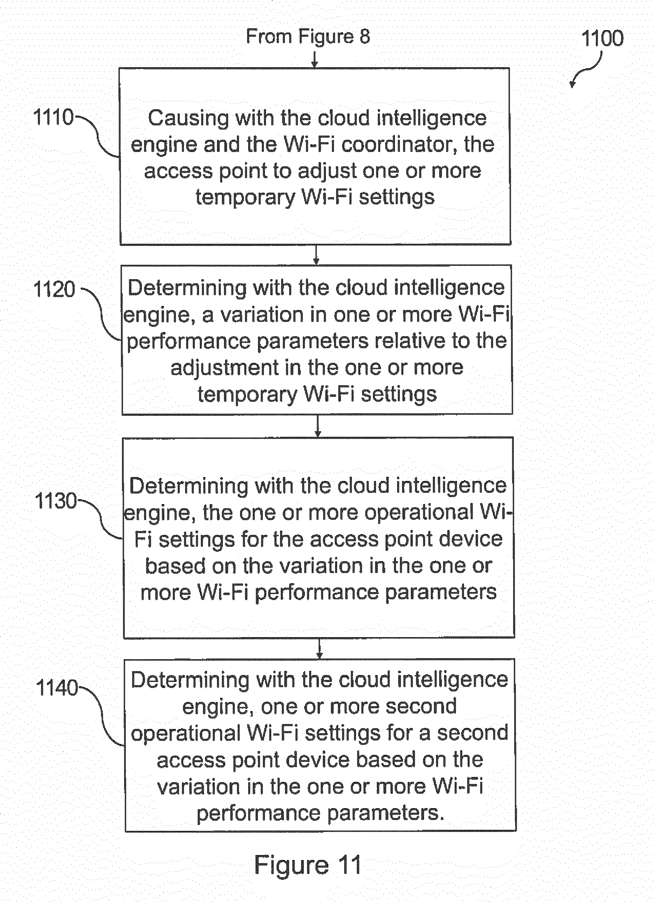

Figure 11 illustrates additional steps 1100 in an exemplary method according to the present invention for selecting and implementing communication parameters to optimize the interaction between access points and client devices. After the steps illustrated in Figure 8, at 1110 the cloud intelligence engine and the Wi-Fi coordinator cause the access point to adjust one or more temporary Wi-Fi settings. Then at 1120, the cloud intelligence engine determines a variation in one or more Wi-Fi performance parameters relative to the adjustment in the one or more temporary Wi-Fi settings. And at 1130, the cloud intelligence engine determines the one or more operational Wi-Fi settings for the access point device based on the variation in the one or more Wi-Fi performance parameters. Additionally, at 1140, when the cloud intelligence engine includes a database for storing the variation in the one or more Wi-Fi performance parameters relative to the adjustment in the one or more temporary Wi-Fi settings, the cloud intelligence engine may determine one or more second operational Wi-Fi settings for a second access point device based on the variation in the one or more Wi-Fi performance parameters.

In the present specification, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in this specification and annexed drawings should generally be construed to mean "one or more" unless specified otherwise or clear from context to be directed to a singular form.

In addition, the terms "example" and "such as" are utilized herein to mean serving as an instance or illustration. Any embodiment or design described herein as an "example" or referred to in connection with a "such as" clause is not necessarily to be construed as preferred or advantageous over other embodiments or designs. Rather, use of the terms "example" or "such as" is intended to present concepts in a concrete fashion. The terms "first," "second," "third," and so forth, as used in the claims and description, unless otherwise clear by context, is for clarity only and does not necessarily indicate or imply any order in time.

What has been described above includes examples of one or more embodiments of the disclosure. It is, of course, not possible to describe every conceivable combination of components or methodologies for purposes of describing these examples, and it can be recognized that many further combinations and permutations of the present embodiments are possible. Accordingly, the embodiments disclosed and/or claimed herein are intended to embrace all such alterations, modifications and variations that fall within the spirit and scope of the detailed description and the appended claims. Furthermore, to the extent that the term "includes" is used in either the detailed description or the claims, such term is intended to be inclusive in a manner similar to the term "comprising" as "comprising" is interpreted when employed as a transitional word in a claim.

### The following is a list of further preferred embodiments of the invention:

Embodiment 1. A system, comprising:
   a Wi-Fi coordinator device configured to receive client device information from one or more client devices associated with an access point device in communication with the Wi-Fi coordinator device; and
   a cloud intelligence engine communicatively coupled to the Wi-Fi coordinator device and configured to receive the client device information, integrate the client device information with other client device information to generate client device capability information, and determine one or more operational Wi-Fi settings for the access point device based at least on the client device capability information.
Embodiment 2. The system of embodiment 1, wherein the cloud intelligence engine is further configured to transmit the one or more operational Wi-Fi settings to the Wi-Fi coordinator device, and the Wi-Fi coordinator device is further configured to cause the access point to implement the one or more operational Wi-Fi settings.
Embodiment 3. The system of embodiment 1, wherein the Wi-Fi coordinator device is configured to send information about the access point to the cloud intelligence engine and the cloud intelligence engine is configured to determine the one or more operational Wi-Fi settings based on the access point information.
Embodiment 4. The system of embodiment 1, wherein the Wi-Fi coordinator device utilizes processing resources in the access point.
Embodiment 5. The system of embodiment 1, wherein the Wi-Fi coordinator device is communicatively coupled to the access point but does not utilize processing resources in the access point.
Embodiment 6. The system of embodiment 1, wherein the Wi-Fi coordinator device includes a DFS master device.
Embodiment 7. The system of embodiment 6, wherein the DFS master device is configured to switch a 5 GHz transceiver of the DFS master device to a channel of a plurality of 5 GHz communication channels, cause a beacon generator of the DFS master device to generate a beacon in the channel of the plurality of 5 GHz communication channels, and cause a radar detector of the DFS master device to scan for a radar signal in the channel of the plurality of 5 GHz communication channels.
Embodiment 8. The system of embodiment 1, wherein the client device information includes information selected from the group consisting of a vendor specific identification, Media Access Control (MAC) address, probe request information, and association request information.
Embodiment 9. The system of embodiment 1, wherein the cloud intelligence engine and the Wi-Fi coordinator device are configured to cause the access point to adjust one or more temporary Wi-Fi settings, determine a variation in one or more Wi-Fi performance parameters relative to the adjustment in the one or more temporary Wi-Fi settings, and to determine the one or more operational Wi-Fi settings for the access point device based on the variation in the one or more Wi-Fi performance parameters.
Embodiment 10. The system of embodiment 9, wherein the cloud intelligence engine includes a database for storing the variation in the one or more Wi-Fi performance parameters relative to the adjustment in the one or more temporary Wi-Fi settings and wherein the cloud intelligence engine is configured to determine one or more second operational Wi-Fi settings for a second access point device based on the variation in the one or more Wi-Fi performance parameters.
Embodiment 11. The system of embodiment 9, wherein the one or more Wi-Fi performance parameters is selected from the group consisting of throughput, range, signal strength, error rate, collision rate, and output power.
Embodiment 12. The system of embodiment 1, wherein the one or more operational Wi-Fi settings is selected from the group consisting of beacon interval, beamforming settings, Wi-Fi multimedia power save (WMMPS) compatibility, frame burst, delivery traffic indication message (DTIM) interval, fragmentation threshold, request to send (RTS) threshold, transmit (TX) antenna, receive (RX) antenna, preamble length, transmit (TX) power, Afterburner/Super G/Speedbooster, Bluetooth coexistence mode, wireless network mode, and sensitivity range (acknowledge (ACK) timing).
Embodiment 13. A method, comprising:
   receiving, using a Wi-Fi coordinator device, client device information from one or more client devices associated with an access point device in communication with the Wi-Fi coordinator device;
   receiving, using a cloud intelligence engine communicatively coupled to the Wi-Fi coordinator device, the client device information;
   integrating, using the cloud intelligence engine, the client device information with other client device information to generate client device capability information; and
   determining, using the cloud intelligence engine, one or more operational Wi-Fi settings for the access point device based at least on the client device capability information.
Embodiment 14. The method of embodiment 13, further comprising:
   transmitting, using the cloud intelligence engine, the one or more operational Wi-Fi settings to the Wi-Fi coordinator device; and
   causing, using the Wi-Fi coordinator device, the access point to implement the one or more operational Wi-Fi settings.
Embodiment 15. The method of embodiment 13, further comprising determining, using the cloud intelligence engine, the one or more operational Wi-Fi settings based on Wi-Fi standards information stored in at least one database.
Embodiment 16. The method of embodiment 13, further comprising determining, using the cloud intelligence engine, the one or more operational Wi-Fi settings based on regulatory information associated with the client devices.
Embodiment 17. The method of embodiment 13, further comprising:
   sending, using the Wi-Fi coordinator device, information about the access point to the cloud intelligence engine; and
   determining, using the cloud intelligence engine, the one or more operational Wi-Fi settings based on the access point information.
Embodiment 18. The method of embodiment 13, further comprising:
   causing, using the cloud intelligence engine and the Wi-Fi coordinator, the access point to adjust one or more temporary Wi-Fi settings;
   determining, using the cloud intelligence engine, a variation in one or more Wi-Fi performance parameters relative to the adjustment in the one or more temporary Wi-Fi settings; and
   determining, using the cloud intelligence engine, the one or more operational Wi-Fi settings for the access point device based on the variation in the one or more Wi-Fi performance parameters.
Embodiment 19. The method of embodiment 18, wherein the cloud intelligence engine includes a database for storing the variation in the one or more Wi-Fi performance parameters relative to the adjustment in the one or more temporary Wi-Fi settings and further comprising determining, using the cloud intelligence engine, one or more second operational Wi-Fi settings for a second access point device based on the variation in the one or more Wi-Fi performance parameters.
Embodiment 20. A system, comprising:
   an access point;
   one or more client devices associated with the access point;
   a Wi-Fi coordinator device communicatively coupled to the access point and configured to receive client device information from the one or more client devices; and
   a cloud intelligence engine communicatively coupled to the Wi-Fi coordinator device and configured to receive the client device information, integrate the client device information with other client device information to generate client device capability information, and determine one or more operational Wi-Fi settings for the access point device based at least on the client device capability information.

## Claims

1. A system, comprising:
a Wi-Fi coordinator device configured to receive client device information from one or more client devices associated with an access point device in communication with the Wi-Fi coordinator device; and
a cloud intelligence engine communicatively coupled to the Wi-Fi coordinator device and configured to receive the client device information, integrate the client device information with other client device information to generate client device capability information, and determine one or more operational Wi-Fi settings for the access point device based at least on the client device capability information.

2. The system of claim 1, wherein the cloud intelligence engine is further configured to transmit the one or more operational Wi-Fi settings to the Wi-Fi coordinator device, and the Wi-Fi coordinator device is further configured to cause the access point to implement the one or more operational Wi-Fi settings.

3. The system of claim 1 or 2, wherein the Wi-Fi coordinator device is configured to send information about the access point to the cloud intelligence engine and the cloud intelligence engine is configured to determine the one or more operational Wi-Fi settings based on the access point information.

4. The system of one of claims 1 to 3, wherein the Wi-Fi coordinator device utilizes processing resources in the access point.

5. The system of one of claims 1 to 4, wherein the Wi-Fi coordinator device is communicatively coupled to the access point but does not utilize processing resources in the access point.

6. The system of one of claims 1 to 5, wherein the Wi-Fi coordinator device includes a DFS master device.

7. The system of claim 6, wherein the DFS master device is configured to switch a 5 GHz transceiver of the DFS master device to a channel of a plurality of 5 GHz communication channels, cause a beacon generator of the DFS master device to generate a beacon in the channel of the plurality of 5 GHz communication channels, and cause a radar detector of the DFS master device to scan for a radar signal in the channel of the plurality of 5 GHz communication channels.

8. The system of one of claims 1 to 7, wherein the client device information includes information selected from the group consisting of a vendor specific identification, Media Access Control (MAC) address, probe request information, and association request information.

9. The system of one of claims 1 to 8, wherein the cloud intelligence engine and the Wi-Fi coordinator device are configured to cause the access point to adjust one or more temporary Wi-Fi settings, determine a variation in one or more Wi-Fi performance parameters relative to the adjustment in the one or more temporary Wi-Fi settings, and to determine the one or more operational Wi-Fi settings for the access point device based on the variation in the one or more Wi-Fi performance parameters; and/or
wherein the cloud intelligence engine includes a database for storing the variation in the one or more Wi-Fi performance parameters relative to the adjustment in the one or more temporary Wi-Fi settings and wherein the cloud intelligence engine is configured to determine one or more second operational Wi-Fi settings for a second access point device based on the variation in the one or more Wi-Fi performance parameters; or
wherein the one or more Wi-Fi performance parameters is selected from the group consisting of throughput, range, signal strength, error rate, collision rate, and output power.

10. The system of one of claims 1 to 9, wherein the one or more operational Wi-Fi settings is selected from the group consisting of beacon interval, beamforming settings, Wi-Fi multimedia power save (WMMPS) compatibility, frame burst, delivery traffic indication message (DTIM) interval, fragmentation threshold, request to send (RTS) threshold, transmit (TX) antenna, receive (RX) antenna, preamble length, transmit (TX) power, Afterburner/Super G/Speedbooster, Bluetooth coexistence mode, wireless network mode, and sensitivity range (acknowledge (ACK) timing).

11. A method, comprising:
receiving, using a Wi-Fi coordinator device, client device information from one or more client devices associated with an access point device in communication with the Wi-Fi coordinator device;
receiving, using a cloud intelligence engine communicatively coupled to the Wi-Fi coordinator device, the client device information;
integrating, using the cloud intelligence engine, the client device information with other client device information to generate client device capability information; and
determining, using the cloud intelligence engine, one or more operational Wi-Fi settings for the access point device based at least on the client device capability information.

12. The method of claim 11, further comprising:
transmitting, using the cloud intelligence engine, the one or more operational Wi-Fi settings to the Wi-Fi coordinator device; and
causing, using the Wi-Fi coordinator device, the access point to implement the one or more operational Wi-Fi settings; or
further comprising determining, using the cloud intelligence engine, the one or more operational Wi-Fi settings based on Wi-Fi standards information stored in at least one database; or
further comprising determining, using the cloud intelligence engine, the one or more operational Wi-Fi settings based on regulatory information associated with the client devices.

13. The method of claim 11 or 12, further comprising:
sending, using the Wi-Fi coordinator device, information about the access point to the cloud intelligence engine; and
determining, using the cloud intelligence engine, the one or more operational Wi-Fi settings based on the access point information; or
further comprising:
causing, using the cloud intelligence engine and the Wi-Fi coordinator, the access point to adjust one or more temporary Wi-Fi settings;
determining, using the cloud intelligence engine, a variation in one or more Wi-Fi performance parameters relative to the adjustment in the one or more temporary Wi-Fi settings; and
determining, using the cloud intelligence engine, the one or more operational Wi-Fi settings for the access point device based on the variation in the one or more Wi-Fi performance parameters.

14. The method of claim 13, wherein the cloud intelligence engine includes a database for storing the variation in the one or more Wi-Fi performance parameters relative to the adjustment in the one or more temporary Wi-Fi settings and further comprising determining, using the cloud intelligence engine, one or more second operational Wi-Fi settings for a second access point device based on the variation in the one or more Wi-Fi performance parameters.

15. A system, comprising:
an access point;
one or more client devices associated with the access point;
a Wi-Fi coordinator device communicatively coupled to the access point and configured to receive client device information from the one or more client devices; and
a cloud intelligence engine communicatively coupled to the Wi-Fi coordinator device and configured to receive the client device information, integrate the client device information with other client device information to generate client device capability information, and determine one or more operational Wi-Fi settings for the access point device based at least on the client device capability information.
